(19) **Europäisches Patentamt / European Patent Office / Office européen des brevets**

(11) **EP 4 553 655 A1**

(12) **EUROPEAN PATENT APPLICATION**
published in accordance with Art. 153(4) EPC

(43) Date of publication:
**14.05.2025 Bulletin 2025/20**

(21) Application number: **23863386.1**

(22) Date of filing: **22.08.2023**

(51) International Patent Classification (IPC):
*G06F 9/48* (2006.01)   *G06F 9/50* (2006.01)
*G06N 20/00* (2019.01)   *G06N 3/063* (2023.01)

(52) Cooperative Patent Classification (CPC):
**G06F 9/48; G06F 9/50; G06N 3/063; G06N 20/00**

(86) International application number:
**PCT/KR2023/012439**

(87) International publication number:
**WO 2024/053910 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 KR 20220114262
20.09.2022 KR 20220118702**

(71) Applicant: **Samsung Electronics Co., Ltd.
Suwon-si, Gyeonggi-do 16677 (KR)**

(72) Inventors:
• **LEE, Hyeonsu
Suwon-si Gyeonggi-do 16677 (KR)**
• **KIM, Jungbae
Suwon-si Gyeonggi-do 16677 (KR)**
• **SEOK, Jinwoong
Suwon-si Gyeonggi-do 16677 (KR)**
• **LEE, Euntaik
Suwon-si Gyeonggi-do 16677 (KR)**
• **LEE, Haseok
Suwon-si Gyeonggi-do 16677 (KR)**
• **KIM, Mooyoung
Suwon-si Gyeonggi-do 16677 (KR)**

(74) Representative: **Walaski, Jan Filip et al
Venner Shipley LLP
200 Aldersgate
London EC1A 4HD (GB)**

(54) **APPARATUS AND METHOD FOR SELECTING ACCELERATOR SUITABLE FOR MACHINE LEARNING MODEL**

(57)    The present relates to an apparatus and method for selecting an accelerator suitable for a machine learning model, wherein accelerators for performing each of operations included in the machine learning model are selected in consideration of the speed of each of the accelerators measured in an idle state according to the operation and the utilization rate of each of the accelerators.

FIG. 1

**EP 4 553 655 A1**

Description

## TECHNICAL FIELD

The following embodiments relate to an accelerator suitable for a machine learning model.

## BACKGROUND ART

A central processing unit (CPU) is usually used for a machine learning model operation. However, an application that requires a fast response, such as a camera, requests an operation from an accelerator chipset with a faster operation speed than a CPU, allowing the chipset to perform an operation.

The types of accelerators currently in use include a CPU, a graphics processing unit (GPU), a neural processing unit (NPU), and a digital signal processor (DSP).

Usually, the selection of an accelerator is determined by a programmer when creating application code. A GPU is used for general use, and a DSP or NPU may be used to speed up an operation when an accelerator to be used by one's application may be specified.

In general, when an accelerator other than a CPU is used, a programmer determines (a GPU, an NPU, etc.) to make code static when creating code.

Even when an accelerator is determined during run time, the optimal use of the accelerator is not considered because it is determined only by the presence or absence of the accelerator and a basic response of the accelerator.

For example, when an artificial intelligence (AI) function using a GPU is used in a situation (such as a game operation) in which a GPU is used a lot, the AI function is also slow to respond, and an existing program may not operate smoothly.

Recently, the demand for multi-tasking has increased due to the emergence of various large screen devices with high usability, and demand for simultaneous use of an NPU and a GPU has increased significantly as augmented reality (AR) and virtual reality (VR) devices are gradually commercialized. As a result, the load of an accelerator has increased, and in this situation, when the accelerator is determined to be fixed as it is now, the increased load may lead to current consumption and performance degradation.

In an operation of an existing machine learning model, only when the operation is performed only by one accelerator or the operation is not performed by a certain accelerator, the operation is fall backed with another accelerator and performed. Various operations in a machine learning model have different characteristics such as a speed and consumption current depending on the type of accelerator, but there is an inefficient aspect in performing an operation of the machine learning model by selecting one accelerator without these differences.

## DISCLOSURE OF THE INVENTION

### TECHNICAL GOALS

In an embodiment, an accelerator to perform each operation included in a machine learning model may be selected by considering a speed measured in an idle state of each of accelerators according to an operation and a utilization rate of each of the accelerators.

### TECHNICAL SOLUTIONS

A method of selecting an accelerator, according to an embodiment, includes, when a machine learning model is received, dividing (512; 612) the machine learning model into operations, verifying (514; 614) an operation delay time of each of accelerators (140) for each operation included in the machine learning model by referring to a delay timetable, and selecting (516; 618) an accelerator to perform the each operation included in the machine learning model by considering the operation delay time of each of the accelerators (140) for the each operation included in the machine learning model.

An electronic device, according to an embodiment, includes a volatile memory configured to store a delay timetable and a processor, in which the processor is configured to, when a machine learning model is received, divide the machine learning model into operations, verify an operation delay time of each of accelerators (140) for each operation included in the machine learning model by referring to the delay timetable, verify current state information of each of the accelerators (140), calculate a current operation delay time of each of the accelerators (140) for the each operation included in the machine learning model by considering a current state of each of the accelerators (140), and select an accelerator of which the current operation delay time is the shortest for the each operation included in the machine learning model by considering the current state of each of the accelerators (140).

## BRIEF DESCRIPTION OF DRAWINGS

FIG. 1 is a diagram illustrating a configuration of an accelerator selection apparatus, according to an embodiment.

FIG. 2 is a flowchart illustrating a message for selecting an accelerator from an accelerator selection apparatus, according to an embodiment.

FIG. 3 is a diagram illustrating an example of dividing a machine learning model into operations in a machine learning model analyzer of an accelerator selection apparatus, according to an embodiment.

FIG. 4 is a diagram illustrating an example of selecting an accelerator for operations of a machine learning model by an accelerator selection apparatus, according to an embodiment.

FIG. 5 is a flowchart illustrating selecting an accelerator from an accelerator selection apparatus, according to an embodiment.

FIG. 6 is a flowchart illustrating selecting an accelerator by considering the state of the accelerator from an accelerator selection apparatus, according to an embodiment.

FIG. 7 is a flowchart illustrating calculating a current operation delay time and selecting an accelerator for an operation from an accelerator selection apparatus, according to an embodiment.

FIG. 8 is a flowchart illustrating selecting an accelerator by considering a case in which the accelerator is not changed from an accelerator selection apparatus, according to an embodiment.

FIG. 9 is a flowchart illustrating selecting an accelerator by considering the number of times the accelerator is changed and a case in which the accelerator is not changed from an accelerator selection apparatus, according to an embodiment.

FIG. 10 is a flowchart illustrating generating a delay timetable in an accelerator selection apparatus, according to an embodiment.

FIG. 11 is a block diagram of an electronic device in a network environment, according to an embodiment.

## BEST MODE FOR CARRYING OUT THE INVENTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the embodiments. These terms are used only for the purpose of discriminating one component from another component, and the nature, the sequences, or the orders of the components are not limited by the terms. It should be noted that if one component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless otherwise mentioned, the descriptions on the embodiments may be applicable to the following embodiments and thus, duplicated descriptions will be omitted for conciseness.

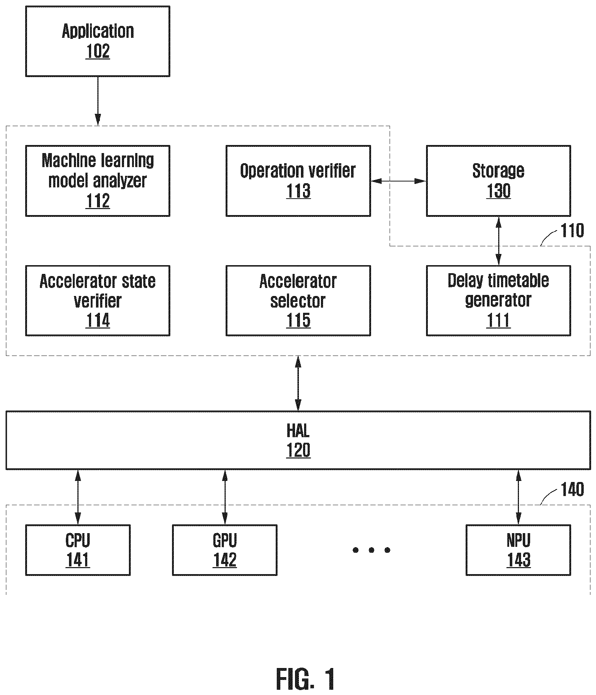

Hereinafter, according to an embodiment, an apparatus and method for selecting an accelerator that is suitable for a machine learning model are described in detail with reference to FIGS. 1 to 11.

FIG. 1 is a diagram illustrating a configuration of an accelerator selection apparatus, according to an embodiment.

Referring to FIG. 1, an accelerator selection apparatus 110 may include a delay timetable generator 111, a machine learning model analyzer 112, an operation verifier 113, an accelerator state verifier 114, and an accelerator selector 115.

According to an embodiment, the accelerator selection apparatus 110 may be included in a central processing unit (CPU) 141.

According to an embodiment, when accelerators 140 are in an idle state, the delay timetable generator 111 may calculate an operation delay time of each accelerator for each operation by executing a machine learning model for training including all types of operations for each of the accelerators 140. The accelerators 140 may include at least one of the CPU 141, a graphics processing unit (GPU) 142, a neural processing unit (NPU) 143, and a digital signal processor (DSP).

According to an embodiment, a delay timetable may be configured as in the example of Table 1 below.

Table 1]

|  | Operation 1 | Operation 2 | ... | Operation N |
|---|---|---|---|---|
| CPU | 100 | 20 | ... | 20 |
| GPU | 50 | 30 | ... | 20 |
| NPU | 10 | N/A | ... | 100 |

According to an embodiment, the delay timetable generator 111 may generate the delay timetable including the operation delay time of each accelerator for each operation and store the generated delay timetable in a storage 130.

According to an embodiment, the machine learning model analyzer 112 may divide the machine learning model into operations when the machine learning model is received from an application 102.

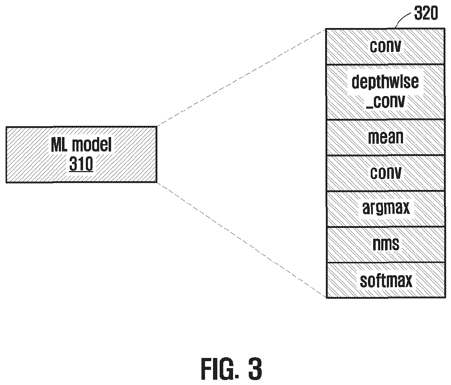

FIG. 3 is a diagram illustrating an example of dividing a machine learning model into operations in a machine learning model analyzer of an accelerator selection apparatus, according to an embodiment.

Referring to FIG. 3, the machine learning model analyzer 112 may divide a machine learning model 310 into a plurality of operations 320. Here, an operation may represent a unit of function configuring the machine learning model.

Returning back to FIG. 1, the operation verifier 113 may verify the operation delay time of each of the accelerators 140 for each operation included in the machine learning model by referring to the delay timetable.

According to an embodiment, the accelerator state verifier 114 may verify current state information of each of the accelerators 140. The current state information of each of the accelerators 140 may include the utilization rate of each of the accelerators 140. According to an embodiment, the current state information of each of the accelerators 140 may further include a current temperature of each of the accelerators 140.

According to an embodiment, the accelerator selector 115 may calculate a current operation delay time of each of the accelerators 140 for each operation included in the machine learning model by considering the current state of each of the accelerators 140 and select an accelerator having the shortest current operation delay time for each operation included in the machine learning model by considering the current state of each of the accelerators 140.

According to an embodiment, the accelerator selector 115 may calculate the current operation delay time through Equation 1 below.

[Equation 1]

$$L(o) = S(o)U(o)w + a$$

Here, L(o) denotes a current operation delay time of an operation (o), S(o) denotes an operation delay time of an operation (o) in a corresponding accelerator searched for in a delay timetable, U(o) denotes a current utilization rate of a corresponding accelerator, w denotes a weight, and a denotes a bias value.

According to an embodiment, the accelerator selector 115 may select an accelerator having the shortest current operation delay time for each operation included in the machine learning model through Equation 2 below.

[Equation 2]

$$\min(LC(o), LG(o), LN(o))$$

Here, LC(o) denotes a current operation delay time of an operation (o) when an accelerator is a CPU C, LG(o) denotes a current operation delay time of an operation (o) when an accelerator is a GPU G, and LN(o) denotes a current operation delay time of an operation (o) when an accelerator is an NPU N.

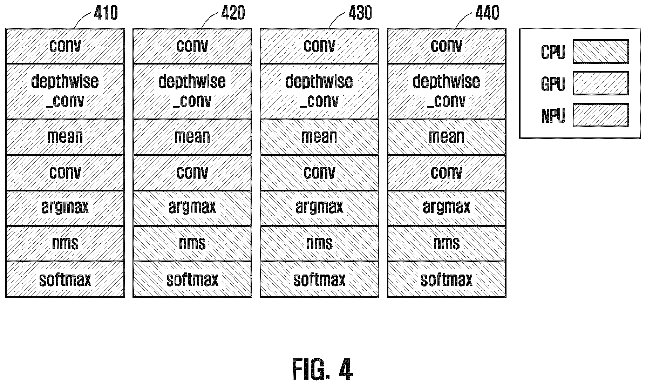

FIG. 4 is a diagram illustrating an example of selecting an accelerator for operations of a machine learning model by an accelerator selection apparatus, according to an embodiment.

Referring to FIG. 4, it may be seen that operations of a machine learning model may be performed by a combination of various accelerators depending on the state of the accelerators 140.

A case 410 in which all operations of the machine learning model are performed by an NPU is a conventional method and may be a method in which all the operations of the machine learning model are performed by one accelerator. In the case 410, as a result of selecting an accelerator for each operation of the machine learning model, when the accelerator conversion is frequent so that the overhead of the accelerator conversion is too high, the accelerator selection apparatus 110 may perform all operations of all machine learning models in one acceleration using a conventional method without converting an accelerator.

Cases 420 and 440 in which all operations of the machine learning model are performed by a CPU and an NPU may be methods of performing an operation of the machine learning model while converting an accelerator using two accelerators.

In the case 420, the accelerator selection apparatus110 may increase the overall operation speed when the CPU performs the operations of argmax, softmax, nms, which are operations in which the CPU has a faster operation speed than the NPU.

In the case 440, the accelerator selection apparatus 110 may additionally perform an operation of mean, which requires many bits when performing calculation, in the CPU when the NPU utilization rate is high.

A case 430 in which all operations of the machine learning model are performed by the CPU and the GPU may be a method in which an operation of the machine learning model may be performed while converting an accelerator using accelerators of the CPU and the GPU when the utilization rate of the NPU is high so that a corresponding operation may not be performed by the NPU.

Returning back to FIG. 1, the accelerator selector 115 may estimate the delay time of the machine learning model when the operation included in the machine learning model is performed by a selected accelerator. More specifically, the accelerator selector 115 may calculate the current operation delay time when each operation included in the machine learning model is performed by the selected accelerator. In addition, the accelerator selector 115 may calculate a first value by summing all current operation delay times of each operation included in the machine learning model. In addition, the accelerator selector 115 may calculate a second value by multiplying a preset conversion time by the number of times the accelerator is converted so that each operation included in the machine learning model is performed by the selected accelerator. Additionally, the accelerator selector 115 may estimate the delay time of the machine learning model when the operation included in the machine learning model is performed by the selected accelerator by adding the first value and the second value. In this case, the preset conversion time may be a conversion time verified in advance through an experiment.

According to an embodiment, the accelerator selector 115 may estimate the delay time of the machine learning model when all operations included in the machine learning model are performed without conversion in each of the accelerators 140. More specifically, the accelerator selector 115 may calculate the current operation delay time when each operation included in the machine learning model is performed by one accelerator for each of the accelerators 140. In addition, the accelerator selector 115 may estimate the delay time of the machine learning model when all the operations included in the machine learning model are performed by one accelerator by summing all the current operation delay times of each operation included in the machine learning model.

According to an embodiment, the accelerator selector 115 may select the accelerator having the shortest current operation delay time for each operation included in the machine learning model when the delay time of the machine learning model when an operation is performed without changing an accelerator is not shorter than the delay time of the machine learning model when the operation is performed by the selected accelerator.

According to an embodiment, the accelerator selector 115 may select, as the accelerator for all operations included in the machine learning model, the accelerator that results in the shortest delay time of the machine learning model when an operation is performed without changing an accelerator, if the delay time of the machine learning model when an operation is performed without changing an accelerator is shorter than the delay time of the machine learning model when the operation is performed by the selected accelerator.

According to an embodiment, the accelerator selector 115 may verify whether the conversion of the accelerator occurs greater than or equal to a preset number of times when the operation included in the machine learning model is performed by the selected accelerator. In addition, when the conversion of the accelerator occurs greater than or equal to a preset number of times when the operation included in the machine learning model is performed by the selected accelerator, the accelerator selector 115 may estimate the delay time of the machine learning model when the operation included in the machine learning model is performed by the selected accelerator. In addition, the accelerator selector 115 may estimate the delay time of the machine learning model when all operations included in the machine learning model are performed without conversion in each of the accelerators 140. In addition, when the delay time of the machine learning model when all operations are performed without changing an accelerator is shorter than the delay time of the machine learning model when all the operations are performed without changing the accelerator, the accelerator selector 115 may select, as the accelerator for all the operations included in the machine learning model, the accelerator having the shortest delay time of the machine learning model when all the operations are performed without changing the accelerator. Here, the accelerator selector 115 may determine that each operation included in the machine learning model is performed by the selected accelerator when the conversion of the accelerator does not occur greater than or equal a preset number of times when the operation included in the machine learning model is performed by the selected accelerator.

According to an embodiment, the accelerator selector 115 may exclude, from an accelerator to perform an operation, an accelerator in which the current temperature of each of the accelerators 140 is greater than or equal to a temperature preset for each of the accelerators 140.

According to an embodiment, the accelerator selector 115 may transmit, to the machine learning model analyzer 112, the final selection result of the accelerator for each operation included in the machine learning model.

According to an embodiment, when the selection result of the accelerator for each operation included in the machine learning model is received from the accelerator selector 115, the machine learning model analyzer 112 may request the selected accelerator to perform each operation included in the machine learning model.

According to an embodiment, the delay timetable generator 111 and the accelerator state verifier 114 may communicate with the accelerators 140 through a hardware abstraction layer (HAL) 120.

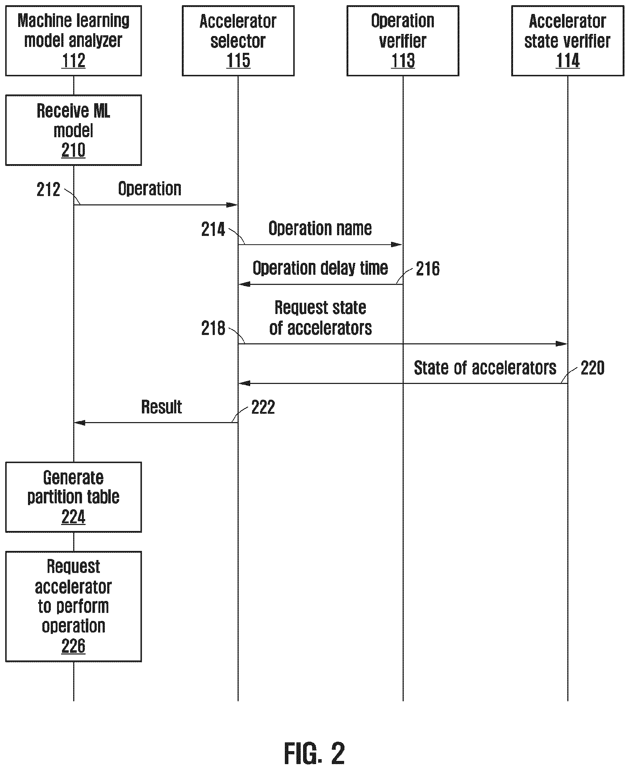

FIG. 2 is a flowchart illustrating a message for selecting an accelerator in an accelerator selection apparatus, according to an embodiment.

Referring to FIG. 2, when a machine learning model is received from the application 102 in operation 210, the machine learning model analyzer 112 may divide the machine learning model into operations and provide operation information to the accelerator selector 115 in operation 212.

According to an embodiment, when the operation information of the machine learning model is received, the accelerator selector 115 may transmit an operation name to the operation verifier 113 in operation 214 and receive an operation delay time for each operation from the operation verifier 113 in operation 216.

According to an embodiment, the accelerator selector 115 may request the state of the accelerators 140 from the accelerator state verifier 114 in operation 218 and receive information about the state of the accelerators 140 from the accelerator state verifier 114 in operation 220.

According to an embodiment, in operation 222, the accelerator selector 115 may select an accelerator corresponding to each operation of the machine learning model by considering the operation delay time of each operation from the operation verifier 113 and the information about the state of the accelerators 140 received from the accelerator state verifier 114 and transmit the selected result to the machine learning model analyzer 112.

According to an embodiment, in operation 224, the machine learning model analyzer 112 may generate a partition table using the selected result received from the accelerator selector 115. Here, the partition table may include operations configuring the machine learning model and information about the accelerator corresponding to each of the operations.

According to an embodiment, in operation 226, the machine learning model analyzer 112 may request the accelerator corresponding to each of the operations of the machine learning model to perform an operation according to the partition table.

Hereinafter, a method according to the present disclosure configured as described above is described with reference to the drawings.

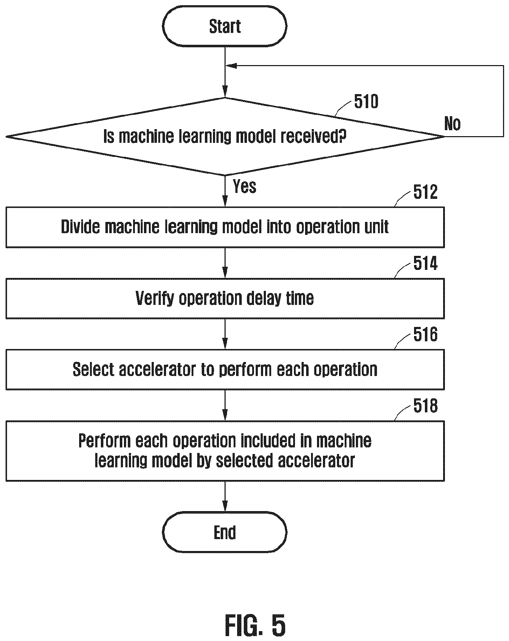

FIG. 5 is a flowchart illustrating selecting an accelerator from an accelerator selection apparatus, according to an embodiment.

Referring to FIG. 5, in operation 512, the accelerator selection apparatus 110 may divide a machine learning model into operations when the machine learning model is received.

According to an embodiment, in operation 514, the accelerator selection apparatus 110 may verify an operation delay time of each of the accelerators 140 for each operation included in the machine learning model by referring to a delay timetable.

According to an embodiment, in operation 516, the accelerator selection apparatus 110 may select an accelerator to perform each operation included in the machine learning model by considering the operation delay time of each of the accelerators 140 for each operation included in the machine learning model.

According to an embodiment, in operation 518, the accelerator selection apparatus 110 may request the selected accelerator to perform each operation included in the machine learning model.

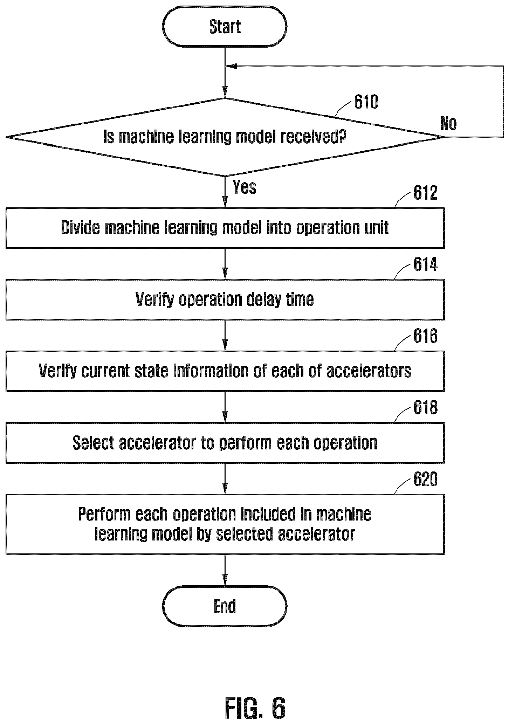

FIG. 6 is a flowchart illustrating selecting an accelerator by considering the state of the accelerator from an accelerator selection apparatus, according to an embodiment.

Referring to FIG. 6, in operation 612, the accelerator selection apparatus 110 may divide a machine learning model into operations when the machine learning model is received.

According to an embodiment, in operation 614, the accelerator selection apparatus 110 may verify an operation delay time of each of the accelerators 140 for each operation included in the machine learning model by referring to a delay timetable.

According to an embodiment, in operation 616, the accelerator selection apparatus 110 may verify current state information of each of the accelerators 140. Here, the current state information of each of the accelerators 140 may include the utilization rate of each of the accelerators 140. According to an embodiment, the current state information of each of the accelerators 140 may further include a current temperature of each of the accelerators 140.

According to an embodiment, in operation 618, the accelerator selection apparatus 110 may select an accelerator to perform each operation included in the machine learning model by considering the current state of each of the accelerators 140.

According to an embodiment, in operation 618, the accelerator selection apparatus 110 may exclude, from an accelerator to perform an operation, an accelerator in which the current temperature of each of the accelerators 140 is greater than or equal a temperature preset for each of the accelerators 140.

According to an embodiment, in operation 620, the accelerator selection apparatus 110 may request the selected accelerator to perform each operation included in the machine learning model.

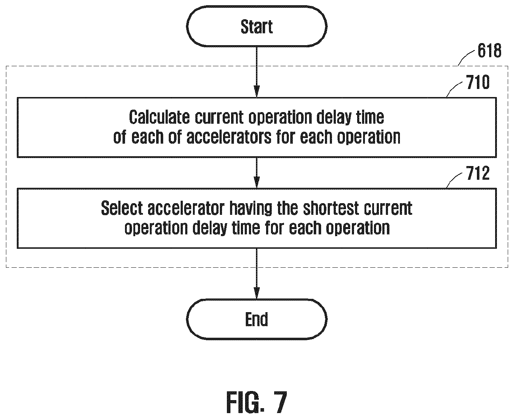

FIG. 7 is a flowchart illustrating calculating a current operation delay time and selecting an accelerator for an operation from an accelerator selection apparatus, according to an embodiment.

Referring to FIG. 7, in operation 710, the accelerator selection apparatus 110 may calculate a current operation delay time of each of the accelerators 140 for each operation included in a machine learning model by considering the current state of each of the accelerators 140. Here, the accelerator selection apparatus 110 may calculate the current operation delay time through Equation 1 below.

$$\text{[Equation 1]}$$

$$L(o) = S(o)U(o)w + a$$

Here, L(o) denotes a current operation delay time of an operation (o), S(o) denotes an operation delay time of an operation (o) in a corresponding accelerator searched for in a delay timetable, U(o) denotes a current utilization rate of a corresponding accelerator, w denotes a weight, and a denotes a bias value.

According to an embodiment, in operation 712, the accelerator selection apparatus 110 may select an accelerator having the shortest current operation delay time for each operation included in the machine learning model by considering the current state of each of the accelerators 140.

Here, the accelerator selection apparatus 110 may select the accelerator having the shortest current operation delay time for each operation included in the machine learning model through Equation 2 below.

$$\text{[Equation 2]}$$

$$\min(LC(o), LG(o), LN(o))$$

Here, LC(o) denotes a current operation delay time of an operation (o) when an accelerator is a CPU C, LG(o) denotes a current operation delay time of an operation (o) when an accelerator is a GPU G, and LN(o) denotes a current operation delay time of an operation (o) when an accelerator is a NPU N.

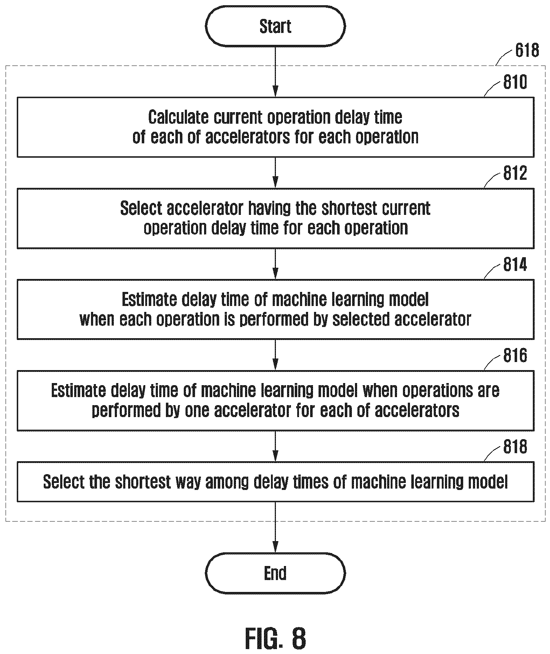

FIG. 8 is a flowchart illustrating selecting an accelerator by considering a case in which the accelerator is not changed from an accelerator selection apparatus, according to an embodiment.

Referring to FIG. 8, in operation 810, the accelerator selection apparatus 110 may calculate a current operation delay time of each of the accelerators 140 for each operation included in a machine learning model by considering the current state of each of the accelerators 140.

According to an embodiment, in operation 812, the accelerator selection apparatus 110 may select an accelerator having the shortest current operation delay time for each operation included in the machine learning model by considering the current state of each of the accelerators 140.

According to an embodiment, in operation 814, the accelerator selection apparatus 110 may estimate the delay time of the machine learning model when the operation included in the machine learning model is performed by the selected accelerator. To describe operation 814 more specifically, the accelerator selection apparatus 110 may calculate the current operation delay time when each operation included in the machine learning model is performed by the selected accelerator. In addition, the accelerator selection apparatus 110 may calculate a first value by summing all current operation delay times of each operation included in the machine learning model. In addition, the accelerator selection apparatus 110 may calculate a second value by multiplying a preset conversion time by the number of times the accelerator is converted so that each operation included in the machine learning model is performed by the selected accelerator. Additionally, the accelerator selection apparatus 110 may estimate the delay time of the machine learning model when the operation included in the machine learning model is performed by the selected accelerator by adding the first value and the second value.

According to an embodiment, in operation 816, the accelerator selection apparatus 110 may estimate the delay time of the machine learning model when all operations included in the machine learning model are performed without conversion in each of the accelerators 140. To describe operation 816 more specifically, the accelerator selection apparatus 110 may calculate the current operation delay time when each operation included in the machine learning model is performed by one accelerator for each of the accelerators 140. In addition, the accelerator selection apparatus 110 may estimate the delay time of the machine learning model when all the operations included in the machine learning model are performed by one accelerator for each of the accelerators 140 by summing all the current operation delay times of each operation included in the machine learning model.

According to an embodiment, in operation 818, the accelerator selection apparatus 110 may select the shortest way among the delay times of the machine learning model estimated from operations 814 and 816. When the delay time of the machine learning model when all operations are performed without changing an accelerator is shorter than the delay time of the machine learning model when all the operations are performed by the selected accelerator, the accelerator selection apparatus 110 may select, as the accelerator for all the operations included in the machine learning model, an accelerator having the shortest delay time of the machine learning model when all the operations are performed without changing the accelerator.

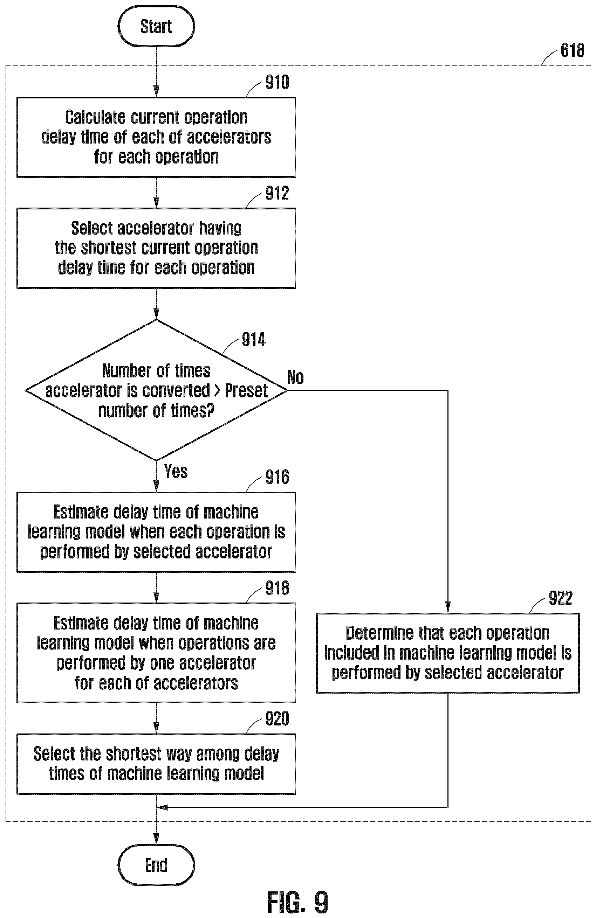

FIG. 9 is a flowchart illustrating selecting an accelerator by considering the number of times the accelerator is changed and a case in which the accelerator is not changed from an accelerator selection apparatus, according to an embodiment.

Referring to FIG. 9, in operation 910, the accelerator selection apparatus 110 may calculate a current operation delay time of each of the accelerators 140 for each operation included in a machine learning model by considering the current state of each of the accelerators 140.

According to an embodiment, in operation 912, the accelerator selection apparatus 110 may select an accelerator having the shortest current operation delay time for each operation included in the machine learning model by considering the current state of each of the accelerators 140.

According to an embodiment, in operation 914, the accelerator selection apparatus 110 may verify whether the conversion of an accelerator occurs greater than or equal to a preset number of times when the operation included in the machine learning model is performed by the selected accelerator.

As a result of the verification of operation 914, in operation 916, when the conversion of the accelerator occurs greater than or equal to a preset number of times, the accelerator selection apparatus 110 may estimate the delay time of the machine learning model when the operation included in the machine learning model is performed by the selected accelerator. To describe operation 916 more specifically, the accelerator selection apparatus 110 may calculate the current operation delay time when each operation included in the machine learning model is performed by the selected accelerator. In addition, the accelerator selection apparatus 110 may calculate a first value by summing all current operation delay times of each operation included in the machine learning model. In addition, the accelerator selection apparatus 110 may calculate a second value by multiplying a preset conversion time by the number of times the accelerator is converted so that each operation included in the machine learning model is performed by the selected accelerator. Additionally, the accelerator selection apparatus 110 may estimate the delay time of the machine learning model when the operation included in the machine learning model is performed by the selected accelerator by adding the first value and the second value.

According to an embodiment, in operation 918, the accelerator selection apparatus 110 may estimate the delay time of the machine learning model when all operations included in the machine learning model are performed without conversion in each of the accelerators 140. To describe operation 918 more specifically, the accelerator selection apparatus 110 may calculate the current operation delay time when each operation included in the machine learning model is performed by one accelerator for each of the accelerators 140. In addition, the accelerator selection apparatus 110 may estimate the delay time of the machine learning model when all the operations included in the machine learning model are performed by one accelerator for each of the accelerators 140 by summing all the current operation delay times of each operation included in the machine learning model.

According to an embodiment, in operation 920, the accelerator selection apparatus 110 may select the shortest way among the delay times of the machine learning model estimated from operations 916 and 918. When the delay time of the machine learning model when all operations are performed without changing an accelerator is shorter than the delay time of the machine learning model when all the operations are performed by the selected accelerator, the accelerator selection apparatus 110 may select, as the accelerator for all the operations included in the machine learning model, an accelerator having the shortest delay time of the machine learning model when all the operations are performed without changing the accelerator.

As a result of the verification of operation 914, when the conversion of the accelerator does not occur greater than or equal to a preset number of times, in operation 922, the accelerator selection apparatus 110 may determine that each operation included in the machine learning model is performed by the selected accelerator.

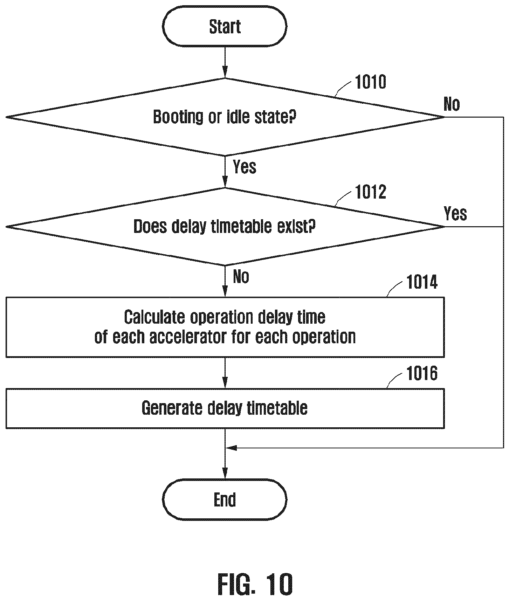

FIG. 10 is a flowchart illustrating generating a delay timetable in an accelerator selection apparatus, according to an embodiment.

Referring to FIG. 10, in operation 1010, the accelerator selection apparatus 110 may verify whether the accelerators 140 are in a booting or idle state.

As a result of the verification of operation 1010, in operation 1012, when the accelerators 140 are in an idle state due to the booting of the accelerator selection apparatus 110, or when the accelerators 140 are in an idle state because there is no command executed by the accelerators 140, the accelerator selection apparatus 110 may verify whether a delay timetable exists.

As a result of the verification of operation 1012, in operation 1014, when the delay timetable does not exist, the accelerator selection apparatus 110 may calculate an operation delay time of each accelerator for each operation by performing a machine learning model for training including all types of operations for each of all accelerators.

According to an embodiment, in operation 1016, the accelerator selection apparatus 110 may generate the delay timetable including the operation delay time of each accelerator for each operation.

Since the generating of the delay timetable of FIG. 10 needs to be performed one time, the generating of the delay timetable may be performed one time when the accelerator selection apparatus 110 is initially booted.

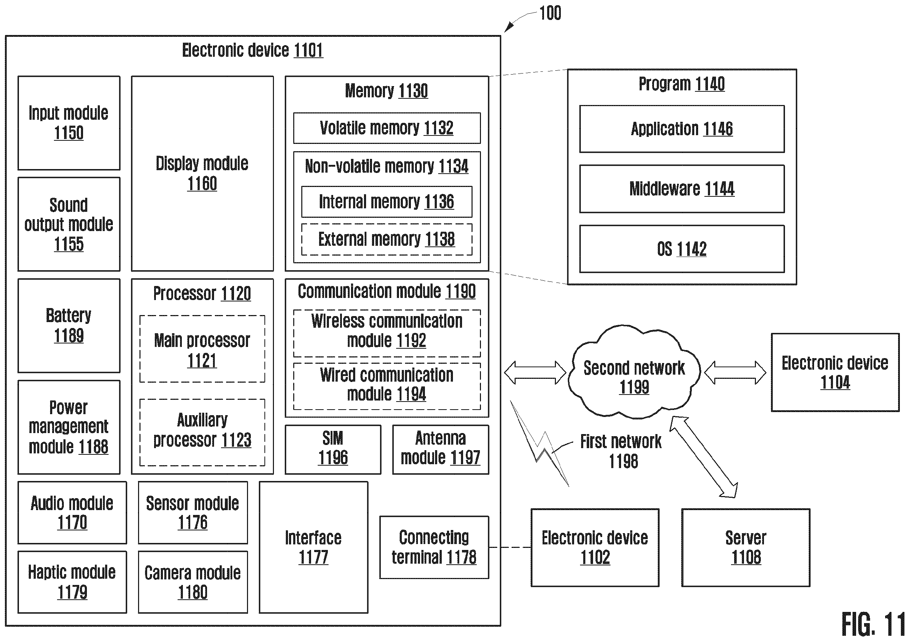

FIG. 11 is a block diagram of an electronic device in a network environment, according to an embodiment.

Referring to FIG. 11, an electronic device 1101 in a network environment 1100 may communicate with an electronic device 1102, or communicate with at least one of an electronic device 1104 and a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, a memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module (SIM) 1196, or an antenna module 1197. In some embodiments, at least one of the components (e.g., the connecting terminal 1178) may be omitted from the electronic device 1101, or one or more other components may be added to the electronic device 1101. In some embodiments, some of the components (e.g., the sensor module 1176, the camera module 1180, or the antenna module 1197) may be integrated as a single component (e.g., the display module 1160).

The processor 1120 may execute, for example, software (e.g., a program 1140) to control at least one other component (e.g., a hardware or software component) of the electronic device 1101 connected to the processor 1120 and may perform various data processing or computations. According to an embodiment, as at least a part of data processing or computations, the processor 1120 may store a command or data received from another component (e.g., the sensor module 1176 or the communication module 1190) in a volatile memory 1132, process the command or the data stored in the volatile memory 1132, and store resulting data in a non-volatile memory 1134. According to an embodiment, the processor 1120 may include a main processor 1121 (e.g., a CPU or an application processor (AP)), or an auxiliary processor 1123 (e.g., a GPU, an NPU, an image signal processor (ISP), a sensor hub processor, or a communication processor (CP)) that is operable independently from or in conjunction with the main processor 1120. For example, when the electronic device 1101 includes the main processor 1121 and the auxiliary processor 1123, the auxiliary processor 1123 may be adapted to consume less power than the main processor 1121 or to be specific to a specified function. The auxiliary processor 1123 may be implemented separately from the main processor 1121 or as a part of the main processor 1121.

The auxiliary processor 1123 may control at least some of functions or states related to at least one (e.g., the display module 1160, the sensor module 1176, or the communication module 1190) of the components of the electronic device 1101, instead of the main processor 1121 while the main processor 1121 is in an inactive (e.g., sleep) state or along with the main processor 1121 while the main processor 1121 is an active state (e.g., executing an application). According to an embodiment, the auxiliary processor 1123 (e.g., an ISP or a CP) may be implemented as a portion of another component (e.g., the camera module 1180 or the communication module 1190) that is functionally related to the auxiliary processor 1123. According to an embodiment, the auxiliary processor 1123 (e.g., an NPU) may include a hardware structure specifically for artificial intelligence model processing. An artificial intelligence model may be generated by machine learning. The machine learning may be performed by, for example, the electronic device 1101, in which artificial intelligence is performed, or performed via a separate server (e.g., the server 1108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

At least one or a combination of the processor 1120, the main processor 1121, or the auxiliary processor 1123 may perform operations of the accelerator selection apparatus 110, the HAL 120, and the accelerators 140 of FIG. 1.

The memory 1130 may store various pieces of data used by at least one component (e.g., the processor 1120 or the sensor module 1176) of the electronic device 1101. The various pieces of data may include, for example, software (e.g., the program 1140) and input data or output data for a command related thereto. The memory 1130 may include the volatile memory 1132 or the non-volatile memory 1134. The memory 1130 may store a delay timetable by performing an operation of the storage 130 of FIG. 1.

The program 1140 may be stored as software in the memory 1130 and may include, for example, an operating system (OS) 1142, middleware 1144, or an application 1146.

The input module 1150 may receive, from outside (e.g., a user) the electronic device 1101, a command or data to be used by another component (e.g., the processor 1120) of the electronic device 1101. The input module 1150 may include, for example, a microphone, a mouse, a keyboard, a key (e.g., a button), or a digital pen (e.g., a stylus pen).

The sound output module 1155 may output a sound signal to the outside of the electronic device 1101. The sound output module 1155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 1160 may visually provide information to the outside (e.g., a user) of the electronic device 1101. The display module 1160 may include, for example, a control circuit for controlling a display, a hologram device, or a projector and control circuitry to control its corresponding one of the display, the hologram device, and the projector. According to an embodiment, the display module 1160 may include a touch sensor adapted to detect a touch, or a pressure sensor adapted to measure the intensity of force of the touch.

The audio module 1170 may convert sound into an electric signal or vice versa. According to an embodiment, the audio module 1170 may obtain the sound via the input module 1150 or output the sound via the sound output module 1155 or an external electronic device (e.g., the electronic device 1102, such as a speaker or headphones) directly or wirelessly connected to the electronic device 1101.

The sensor module 1176 may detect an operational state (e.g., power or temperature) of the electronic device 1101 or an environmental state (e.g., a state of a user) external to the electronic device 1101 and generate an electric signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used by the electronic device 1101 to couple with the external electronic device (e.g., the electronic device 1102) directly (e.g., by wire) or wirelessly. According to an embodiment, the interface 1177 may include, for example, a high-definition multimedia interface (HDMI), a universal serial bus (USB) interface, a secure digital (SD) card interface, or an audio interface.

The connecting terminal 1178 may include a connector via which the electronic device 1101 may physically connect to an external electronic device (e.g., the electronic device 1102). According to an embodiment, the connecting terminal 1178 may include, for example, an HDMI connector, a USB connector, an SD card connector, or an audio connector (e.g., a headphones connector).

The haptic module 1179 may convert an electric signal into a mechanical stimulus (e.g., a vibration or a movement) or an electrical stimulus, which may be recognized by a user via their tactile sensation or kinesthetic sensation. According to an embodiment, the haptic module 1179 may include, for example, a motor, a piezoelectric element, or an electric stimulator.

The camera module 1180 may capture a still image and moving images. According to an embodiment, the camera module 1180 may include one or more lenses, image sensors, ISPs, and flashes.

The power management module 1188 may manage power supplied to the electronic device 1101. According to an embodiment, the power management module 1188 may be implemented as, for example, at least a part of a power management integrated circuit (PMIC).

The battery 1189 may supply power to at least one component of the electronic device 1101. According to an embodiment, the battery 1189 may include, for example, a primary cell, which is not rechargeable, a secondary cell, which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more CPs that are operable independently from the processor 1120 (e.g., an AP) and that support direct (e.g., wired) communication or wireless communication.

According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module, or a power line communication (PLC) module). A corresponding one of these communication modules may communicate with the external electronic device, for example, the electronic device 1104, via a first network 1198 (e.g., a short-range communication network, such as Bluetooth™, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the SIM 1196.

The wireless communication module 1192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., a mmWave band) to achieve, e.g., a high data transmission rate. The wireless communication module 1192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element including a conductive material or a conductive pattern formed in or on a substrate (e.g., a printed circuit board (PCB)). According to an embodiment, the antenna module 1197 may include a plurality of antennas (e.g., an antenna array). In such a case, at least one antenna appropriate for a communication scheme used in a communication network, such as the first network 1198 or the second network 1199, may be selected by, for example, the communication module 1190 from the plurality of antennas. The signal or power may be transmitted or received between the communication module 1190 and the external electronic device via the at least one selected antenna. According to an embodiment, another component (e.g., a radio frequency integrated circuit (RFIC)) other than the radiating element may be additionally formed as a part of the antenna module 1197.

According to various embodiments, the antenna module 1197 may form a mmWave antenna module. According to an embodiment, the mm Wave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device (e.g., the electronic device 1104) via the server 1108 coupled with the second network 1199. Each of the external electronic devices (e.g., the electronic device 1102 or 1104) may be a device of the same type as or a different type from the electronic device 1101. According to an embodiment, all or some of operations to be executed by the electronic device 1101 may be executed by one or more external electronic devices (e.g., the electronic devices 1102 and 1104 and the server 1108). For example, if the electronic device 1101 needs to perform a function or a service automatically, or in response to a request from a user or another device, the electronic device 1101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 1101. The electronic device 1101 may provide the result, with or without further processing the result, as at least part of a response to the request. To that end, cloud computing, distributed computing, mobile edge computing (MEC), or client-server computing technology may be used, for example. The electronic device 1101 may provide ultra low-latency services using, e.g., distributed computing or MEC. In an embodiment, the external electronic device (e.g., the electronic device 1104) may include an Internet-of-things (IoT) device. The server 1108 may be an intelligent server using machine learning and/or a neural network. According to an embodiment, the external electronic device (e.g., the electronic device 1104) or the server 1108 may be included in the second network 1199. The electronic device 1101 may be applied to intelligent services (e.g., a smart home, a smart city, a smart car, or healthcare) based on 5G communication technology or IoT-related technology.

According to an embodiment, a method of selecting an accelerator may include, when a machine learning model is received, dividing (512; 612) the machine learning model into operations verifying (514; 614) an operation delay time of each of accelerators (140) for each operation included in the machine learning model by referring to a delay timetable, and selecting (516; 618) an accelerator to perform the each operation included in the machine learning model by considering the operation delay time of each of the accelerators (140) for the each operation included in the machine learning model.

According to an embodiment, the method may further include performing (518; 620) the each operation included in the machine learning model by a selected accelerator.

According to an embodiment, the accelerators (140) may include at least one of the CPU (141), the GPU (142), the NPU (143), and the DSP.

According to an embodiment, the method may further include verifying (616) current state information of each of the accelerators (140).

According to an embodiment, the selecting (618) of the accelerator to perform the each operation included in the machine learning model may include calculating (710; 810; 910) a current operation delay time of each of the accelerators (140) for the each operation included in the machine learning model by considering a current state of each of the accelerators (140) and selecting (712; 812; 912) an accelerator of which the current operation delay time is the shortest for the each operation included in the machine learning model by considering the current state of each of the accelerators (140).

According to an embodiment, the calculating (710; 810; 910) of the current operation delay time of each of the accelerators (140) for the each operation included in the machine learning model by considering the current state of each of the accelerators (140) may include calculating the current operation delay time through Equation 1 below.

$$[\text{Equation 1}]$$

$$L(o) = S(o)U(o)w + a$$

Here, L(o) denotes a current operation delay time of an operation (o), S(o) denotes an operation delay time of an operation (o) in a corresponding accelerator searched for in a delay timetable, U(o) denotes a current utilization rate of a corresponding accelerator, w denotes a weight, and a denotes a bias value.

According to an embodiment, the current state information of each of the accelerators (140) may include a utilization rate of each of the accelerators (140).

According to an embodiment, the current state information of each of the accelerators (140) may include the utilization rate of each of the accelerators (140) and a current temperature of each of the accelerators (140).

According to an embodiment, the selecting (618) of the accelerator to perform the each operation included in the machine learning model may include excluding, from an accelerator to perform an operation, an accelerator in which the current temperature of each of the accelerators (140) is greater than or equal to a temperature preset for each of the accelerators (140).

According to an embodiment, the selecting (618) of the accelerator to perform the each operation included in the machine learning model may include estimating (814) a delay time of the machine learning model when the each operation included in the machine learning model is performed by the selected accelerator, estimating (816) the delay time of the machine learning model when all operations included in the machine learning model are performed without conversion in each of the accelerators (140), and when the delay time of the machine learning model when all operations are performed without changing an accelerator is shorter than the delay time of the machine learning model when all the operations are performed by the selected accelerator, selecting (818), as an accelerator of all the operations included in the machine learning model, an accelerator of which the delay time of the machine learning model is the shortest when all the operations are performed without changing an accelerator.

According to an embodiment, the estimating (814; 916) of the delay time of the machine learning model when the each operation included in the machine learning model is performed by the selected accelerator may include calculating a current operation delay time when the each operation included in the machine learning model is performed by the selected accelerator, calculating a first value by summing all current operation delay times of the each operation included in the machine learning model, calculating a second value by multiplying a preset conversion time by the number of times an accelerator is converted so that the each operation included in the machine learning model is performed by the selected accelerator, and estimating the delay time of the machine learning model when the each operation included in the machine learning model is performed by the selected accelerator by adding the first value and the second value.

According to an embodiment, the method of one of claims 1 and 2, wherein the estimating (816; 918) of the delay time of the machine learning model when all the operations included in the machine learning model are performed without conversion in each of the accelerators (140) may include calculating a current operation delay time when the each operation included in the machine learning model is performed by one accelerator for each of the accelerators (140) and estimating the delay time of the machine learning model when all the operations included in the machine learning model are performed by the one accelerator for each of the accelerators (140) by summing all the current operation delay times of the each operation included in the machine learning model.

According to an embodiment, the selecting (618) of the accelerator to perform the each operation included in the machine learning model may include verifying (914) whether conversion of an accelerator occurs greater than or equal a preset number of times when the each operation included in the machine learning model is performed by the selected accelerator, estimating (916) the delay time of the machine learning model when the each operation included in the machine learning model is performed by the selected accelerator when the conversion of the accelerator occurs greater than or equal to the preset number of times when the each operation included in the machine learning model is performed by the selected accelerator, estimating (918) the delay time of the machine learning model when all the operations included in the machine learning model are performed without conversion in each of the accelerators (140), and when the delay time of the machine learning model when all the operations are performed without changing an accelerator is shorter than the delay time of the machine learning model when all the operations are performed by the selected accelerator, selecting (920), as an accelerator of all the operations included in the machine learning model, an accelerator of which the delay time of the machine learning model is the shortest when all the operations are performed without changing an accelerator.

According to an embodiment, the selecting (618) of the accelerator to perform the each operation included in the machine learning model may include verifying (914) whether the conversion of the accelerator occurs greater than or equal to the preset number of times when the each operation included in the machine learning model is performed by the selected accelerator and determining (922) that the each operation included in the machine learning model is performed by the selected accelerator when the conversion of the accelerator does not occur greater than or equal to the preset number of times when the each operation included in the machine learning model is performed by the selected accelerator.

According to an embodiment, the method may further include, when the accelerators (140) are in an idle state, calculating (1014) an operation delay time of each accelerator for each operation by performing a machine learning model for training including all types of operations for each of all accelerators and generating (1016) the delay timetable including an operation delay time of each accelerator for each operation.

According to an embodiment, an electronic device may include a volatile memory configured to store a delay timetable and a processor, in which the processor may be configured to, when a machine learning model is received, divide the machine learning model into operations, verify an operation delay time of each of accelerators

(140) for each operation included in the machine learning model by referring to the delay timetable, verify current state information of each of the accelerators (140), calculate a current operation delay time of each of the accelerators (140) for the each operation included in the machine learning model by considering a current state of each of the accelerators (140), and select an accelerator of which the current operation delay time is the shortest for the each operation included in the machine learning model by considering the current state of each of the accelerators (140).

According to an embodiment, the processor may calculate the current operation delay time through Equation 1 below.

$$[\text{Equation 1}]$$

$$L(o) = S(o)U(o)w + a$$

Here, L(o) denotes a current operation delay time of an operation (o), S(o) denotes an operation delay time of an operation (o) in a corresponding accelerator searched for in a delay timetable, U(o) denotes a current utilization rate of a corresponding accelerator, w denotes a weight, and a denotes a bias value.

According to an embodiment, the processor may be configured to estimate a delay time of the machine learning model when an operation included in the machine learning model is performed by the selected accelerator, estimate the delay time of the machine learning model when all operations included in the machine learning model are performed without conversion in each of the accelerators (140), and when the delay time of the machine learning model when all the operations are performed without changing an accelerator is shorter than the delay time of the machine learning model when all the operations are performed by the selected accelerator, select, as an accelerator of all the operations included in the machine learning model, an accelerator of which the delay time of the machine learning model is the shortest when all the operations are performed without changing an accelerator.

According to an embodiment, the processor may be configured to calculate a current operation delay time when the each operation included in the machine learning model is performed by the selected accelerator, calculate a first value by summing all current operation delay times of the each operation included in the machine learning model, calculate a second value by multiplying a preset conversion time by the number of times an accelerator is converted so that the each operation included in the machine learning model is performed by the selected accelerator; and estimate the delay time of the machine learning model when the each operation included in the machine learning model is performed by the selected accelerator by adding the first value and the second value.

According to an embodiment, the processor may be configured to calculate a current operation delay time when the each operation included in the machine learning model is performed by one accelerator for each of the accelerators (140) and estimate the delay time of the machine learning model when all the operations included in the machine learning model are performed by the one accelerator for each of the accelerators (140) by summing all the current operation delay times of the each operation included in the machine learning model.

According to an embodiment, the processor may be configured to, when the accelerators (140) are in an idle state, calculate an operation delay time of each accelerator for each operation by performing a machine learning model for training including all types of operations for each of all accelerators and generate the delay timetable including an operation delay time of each accelerator for each operation.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The devices described above may be configured to act as one or more software modules in order to perform the operations of the embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer readable recording mediums.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents to the claims are also within the scope of the following claims.

**Claims**

1. A method of selecting an accelerator, the method comprising:

   when a machine learning model is received, dividing (512; 612) the machine learning model into operations;
   verifying (514; 614) an operation delay time of each of accelerators (140) for each operation comprised in the machine learning model by referring to a delay timetable; and
   selecting (516; 618) an accelerator to perform the each operation comprised in the machine learning model by considering the operation delay time of each of the accelerators (140) for the each operation comprised in the machine learning model.

2. The method of claim 1, further comprising:
   performing (518; 620) the each operation comprised in the machine learning model by a selected accelerator.

3. The method of one of claims 1 and 2, wherein the accelerators (140) comprise at least one of a central processing unit (CPU) (141), a graphics processing unit (GPU) (142), a neural processing unit (NPU) (143), and a digital signal processor (DSP).

4. The method of one of claims 1 to 3, further comprising:

verifying (616) current state information of each of the accelerators (140),
wherein the selecting (618) of the accelerator to perform the each operation comprised in the machine learning model comprises:

calculating (710; 810; 910) a current operation delay time of each of the accelerators (140) for the each operation comprised in the machine learning model by considering a current state of each of the accelerators (140); and
selecting (712; 812; 912) an accelerator of which the current operation delay time is a shortest for the each operation comprised in the machine learning model by considering the current state of each of the accelerators (140).

5. The method of one of claims 1 to 4, wherein the calculating (710; 810; 910) of the current operation delay time of each of the accelerators (140) for the each operation comprised in the machine learning model by considering the current state of each of the accelerators (140) comprises calculating the current operation delay time through Equation 1 below.

[Equation 1]

$$L(o) = S(o)U(o)w + a$$

Here, L(o) denotes a current operation delay time of an operation (o), S(o) denotes an operation delay time of an operation (o) in a corresponding accelerator searched for in a delay timetable, U(o) denotes a current utilization rate of a corresponding accelerator, w denotes a weight, and a denotes a bias value.

6. The method of one of claims 1 to 5, wherein the current state information of each of the accelerators (140) comprises a utilization rate of each of the accelerators (140).

7. The method of one of claims 1 to 6, wherein the current state information of each of the accelerators (140) comprises the utilization rate of each of the accelerators (140) and a current temperature of each of the accelerators (140).

8. The method of one of claims 1 to 7, wherein the selecting (618) of the accelerator to perform the each operation comprised in the machine learning model comprises excluding, from an accelerator to perform an operation, an accelerator in which the current temperature of each of the accelerators (140) is greater than or equal to a temperature preset for each of the accelerators (140).

9. The method of one of claims 1 to 8, wherein the selecting (618) of the accelerator to perform the each operation comprised in the machine learning model comprises:

estimating (814) a delay time of the machine learning model when the each operation comprised in the machine learning model is performed by the selected accelerator;
estimating (816) the delay time of the machine learning model when all operations comprised in the machine learning model are performed without conversion in each of the accelerators (140); and
when the delay time of the machine learning model when all operations are performed without changing an accelerator is shorter than the delay time of the machine learning model when all the operations are performed by the selected accelerator, selecting (818), as an accelerator of all the operations comprised in the machine learning model, an accelerator of which the delay time of the machine learning model is a shortest when all the operations are performed without changing an accelerator.

10. The method of one of claims 1 to 9, wherein the estimating (814; 916) of the delay time of the machine learning model when the each operation comprised in the machine learning model is performed by the selected accelerator comprises:

calculating a current operation delay time when the each operation comprised in the machine learning model is performed by the selected accelerator;

calculating a first value by summing all current operation delay times of the each operation comprised in the machine learning model;

calculating a second value by multiplying a preset conversion time by a number of times an accelerator is converted so that the each operation comprised in the machine learning model is performed by the selected accelerator;

estimating the delay time of the machine learning model when the each operation comprised in the machine learning model is performed by the selected accelerator by adding the first value and the second value.

11. The method of one of claims 1 to 10, wherein the estimating (816; 918) of the delay time of the machine learning model when all the operations comprised in the machine learning model are performed without conversion in each of the accelerators (140) comprises:

calculating a current operation delay time when the each operation comprised in the machine learning model is performed by one accelerator for each of the accelerators (140); and

estimating the delay time of the machine learning model when all the operations comprised in the machine learning model are performed by the one accelerator for each of the accelerators (140) by summing all the current operation delay times of the each operation comprised in the machine learning model.

12. The method of one of claims 1 to 11, wherein the selecting (618) of the accelerator to perform the each operation comprised in the machine learning model comprises:

verifying (914) whether conversion of an accelerator occurs greater than or equal a preset number of times when the each operation comprised in the machine learning model is performed by the selected accelerator;

estimating (916) the delay time of the machine learning model when the each operation comprised in the machine learning model is performed by the selected accelerator when the conversion of the accelerator occurs greater than or equal to the preset number of times when the each operation comprised in the machine learning model is performed by the selected accelerator;

estimating (918) the delay time of the machine learning model when all the operations comprised in the machine learning model are performed without conversion in each of the accelerators (140); and

when the delay time of the machine learning model when all the operations are performed without changing an accelerator is shorter than the delay time of the machine learning model when all the operations are performed by the selected accelerator, selecting (920), as an accelerator of all the operations comprised in the machine learning model, an accelerator of which the delay time of the machine learning model is a shortest when all the operations are performed without changing an accelerator.

13. The method of one of claims 1 to 12, wherein the selecting (618) of the accelerator to perform the each operation comprised in the machine learning model comprises:

verifying (914) whether the conversion of the accelerator occurs greater than or equal to the preset number of times when the each operation comprised in the machine learning model is performed by the selected accelerator; and

determining (922) that the each operation comprised in the machine learning model is performed by the selected accelerator when the conversion of the accelerator does not occur greater than or equal to the preset number of times when the each operation comprised in the machine learning model is performed by the selected accelerator.

14. The method of one of claims 1 to 13, further comprising:

when the accelerators (140) are in an idle state, calculating (1014) an operation delay time of each accelerator for each operation by performing a machine learning model for training comprising all types of operations for each of all accelerators; and

generating (1016) the delay timetable comprising an operation delay time of each accelerator for each operation.

15. An electronic device comprising:

a volatile memory configured to store a delay timetable; and

a processor,
wherein the processor is configured to:

when a machine learning model is received, divide the machine learning model into operations;
verify an operation delay time of each of accelerators (140) for each operation comprised in the machine learning model by referring to the delay timetable;
verify current state information of each of the accelerators (140);
calculate a current operation delay time of each of the accelerators (140) for the each operation comprised in the machine learning model by considering a current state of each of the accelerators (140) and select an accelerator of which the current operation delay time is a shortest for the each operation comprised in the machine learning model by considering the current state of each of the accelerators (140).

Application
102

Machine learning
model analyzer
112

Operation verifier
113

Storage
130

110

Accelerator state
verifier
114

Accelerator
selector
115

Delay timetable
generator
111

HAL
120

140

CPU
141

GPU
142

• • •

NPU
143

FIG. 1

**FIG. 2**

320

conv

depthwise
_conv

mean

conv

argmax

nms

softmax

ML model
310

**FIG. 3**

FIG. 4

```
                    ┌─────────────┐
                    │    Start    │
                    └──────┬──────┘
                           │
                           ▼
                         ╱ 510 ╲
            ┌────────◄──╱        ╲──►──┐ No
            │  Yes    ╲ Is machine    ╱  │
            │          ╲ learning    ╱   │
            │           ╲ model     ╱    │
            │            ╲received? ╱    │
            ▼                            │
```

Is machine learning model received? — 510

Yes — 512

Divide machine learning model into operation unit

514

Verify operation delay time

516

Select accelerator to perform each operation

518

Perform each operation included in machine learning model by selected accelerator

End

# FIG. 5

```
                        ┌──────────────┐
                        │    Start     │
                        └──────────────┘
                               │
                               │◄──────────────────────────┐
                               ▼                            │
                          ╱─────────────────╲    ╱610        │
                   ╱─────╱                   ╲─────╲         │
                  ╱   Is machine learning model   ╲   No     │
                  ╲          received?            ╱──────────┘
                   ╲─────╲                   ╱─────╱
                          ╲─────────────────╱
                               │ Yes                    ╱612
                               ▼
            ┌──────────────────────────────────────────────┐
            │     Divide machine learning model into       │
            │                operation unit                │
            └──────────────────────────────────────────────┘
                               │                        ╱614
                               ▼
            ┌──────────────────────────────────────────────┐
            │            Verify operation delay time        │
            └──────────────────────────────────────────────┘
                               │                        ╱616
                               ▼
            ┌──────────────────────────────────────────────┐
            │  Verify current state information of each of  │
            │                  accelerators                 │
            └──────────────────────────────────────────────┘
                               │                        ╱618
                               ▼
            ┌──────────────────────────────────────────────┐
            │     Select accelerator to perform each        │
            │                  operation                    │
            └──────────────────────────────────────────────┘
                               │                        ╱620
                               ▼
            ┌──────────────────────────────────────────────┐
            │     Perform each operation included in machine│
            │      learning model by selected accelerator   │
            └──────────────────────────────────────────────┘
                               │
                               ▼
                        ┌──────────────┐
                        │     End      │
                        └──────────────┘
```

## FIG. 6

Start

618

710

Calculate current operation delay time
of each of accelerators for each operation

712

Select accelerator having the shortest current
operation delay time for each operation

End

FIG. 7

```
                    ┌─────────────┐
                    │    Start    │
                    └─────────────┘
                           │
    ┌ ─ ─ ─ ─ ─ ─ ─ ─ ─ ─ ─│─ ─ ─ ─ ─ ─ ─ ─ ─ ─ ─ ─ ─ ─ ┐  618
    │                       ▼                               │  810
    │  ┌─────────────────────────────────────────────┐     │
    │  │     Calculate current operation delay time   │     │
    │  │    of each of accelerators for each operation │     │
    │  └─────────────────────────────────────────────┘     │
    │                       │                               │  812
    │                       ▼                               │
    │  ┌─────────────────────────────────────────────┐     │
    │  │   Select accelerator having the shortest current │  │
    │  │     operation delay time for each operation   │     │
    │  └─────────────────────────────────────────────┘     │
    │                       │                               │  814
    │                       ▼                               │
    │  ┌─────────────────────────────────────────────┐     │
    │  │    Estimate delay time of machine learning model │ │
    │  │  when each operation is performed by selected accelerator │
    │  └─────────────────────────────────────────────┘     │
    │                       │                               │  816
    │                       ▼                               │
    │  ┌─────────────────────────────────────────────┐     │
    │  │ Estimate delay time of machine learning model when operations are │
    │  │   performed by one accelerator for each of accelerators │
    │  └─────────────────────────────────────────────┘     │
    │                       │                               │  818
    │                       ▼                               │
    │  ┌─────────────────────────────────────────────┐     │
    │  │ Select the shortest way among delay times of machine learning model │
    │  └─────────────────────────────────────────────┘     │
    └ ─ ─ ─ ─ ─ ─ ─ ─ ─ ─ ─│─ ─ ─ ─ ─ ─ ─ ─ ─ ─ ─ ─ ─ ─ ┘
                           ▼
                    ┌─────────────┐
                    │     End     │
                    └─────────────┘
```

# FIG. 8

Start

618

910

Calculate current operation
delay time of each of accelerators
for each operation

912

Select accelerator having
the shortest current operation
delay time for each operation

914

Number of times
accelerator is converted > Preset
number of times?

No

Yes

916

Estimate delay time of machine
learning model when each operation is
performed by selected accelerator

918

Estimate delay time of machine
learning model when operations are
performed by one accelerator
for each of accelerators

920

Select the shortest way among delay
times of machine learning model

922

Determine that each operation
included in machine learning model is
performed by selected accelerator

End

FIG. 9

Start

Booting or idle state? — 1010 — No

Yes

Does delay timetable exist? — 1012 — Yes

No

Calculate operation delay time
of each accelerator for each operation — 1014

Generate delay timetable — 1016

End

FIG. 10

FIG. 11

## INTERNATIONAL SEARCH REPORT

| International application No. |
| --- |
| **PCT/KR2023/012439** |

| | |
| --- | --- |
| **A. CLASSIFICATION OF SUBJECT MATTER** | |
| **G06F 9/48**(2006.01)i; **G06F 9/50**(2006.01)i; **G06N 20/00**(2019.01)i; **G06N 3/063**(2006.01)i | |
| According to International Patent Classification (IPC) or to both national classification and IPC | |

**B. FIELDS SEARCHED**

Minimum documentation searched (classification system followed by classification symbols)

G06F 9/48(2006.01); G06F 9/50(2006.01); G06N 3/04(2006.01); G06N 3/063(2006.01); G06N 3/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기계학습(machine learning), 가속기(accelerator), 할당(allocation), 지연시간(delay time), 오퍼레이션(operation)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2076257 B1 (GOOGLE LLC) 11 February 2020 (2020-02-11)<br>See paragraphs [0003], [0010], [0013], [0029], [0034], [0052] and [0065]-[0066]; claim 9; and figures 2 and 4. | 1-6,9-11,14-15 |
| Y | | 7-8 |
| A | | 12-13 |
| Y | US 2020-0019854 A1 (SAMSUNG ELECTRONICS CO., LTD.) 16 January 2020 (2020-01-16)<br>See paragraph [0049]; and claim 1. | 7-8 |
| A | JP 2022-092618 A (INTERNATIONAL BUSINESS MACHINES CORPORATION) 22 June 2022 (2022-06-22)<br>See paragraphs [0025]-[0042]; claim 1; and figures 2-4. | 1-15 |
| A | JP 2020-512639 A (GOOGLE LLC) 23 April 2020 (2020-04-23)<br>See paragraphs [0047]-[0077]; and figures 3-4. | 1-15 |

| ☑ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 November 2023** | **24 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/012439**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2021-0127538 A (MOREH CORP.) 22 October 2021 (2021-10-22)<br>See paragraphs [0085]-[0109]; and figures 5-8. | 1-15 |

Form PCT/ISA/210 (second sheet) (July 2022)

<div align="center">

**INTERNATIONAL SEARCH REPORT**
**Information on patent family members**

</div>

| International application No. |
| --- |
| **PCT/KR2023/012439** |

| Patent document cited in search report | | | Publication date (day/month/year) | Patent family member(s) | | | Publication date (day/month/year) |
| --- | --- | --- | --- | --- | --- | --- | --- |
| KR | 10-2076257 | B1 | 11 February 2020 | CN | 108292241 | A | 17 July 2018 |
| | | | | CN | 108292241 | B | 24 May 2022 |
| | | | | CN | 115061810 | A | 16 September 2022 |
| | | | | EP | 3353656 | B1 | 06 May 2020 |
| | | | | EP | 3705994 | A1 | 09 September 2020 |
| | | | | JP | 2018-538607 | A | 27 December 2018 |
| | | | | JP | 2020-129404 | A | 27 August 2020 |
| | | | | JP | 6898496 | B2 | 07 July 2021 |
| | | | | JP | 6983154 | B2 | 17 December 2021 |
| | | | | KR | 10-2020-0015829 | A | 12 February 2020 |
| | | | | KR | 10-2022-0116573 | A | 23 August 2022 |
| | | | | KR | 10-2433254 | B1 | 18 August 2022 |
| | | | | US | 10534997 | B2 | 14 January 2020 |
| | | | | US | 10860925 | B2 | 08 December 2020 |
| | | | | US | 11769061 | B2 | 26 September 2023 |
| | | | | US | 2017-0124452 | A1 | 04 May 2017 |
| | | | | US | 2018-0247197 | A1 | 30 August 2018 |
| | | | | US | 2020-0302302 | A1 | 24 September 2020 |
| | | | | WO | 2017-075438 | A1 | 04 May 2017 |
| US | 2020-0019854 | A1 | 16 January 2020 | US | 11740941 | B2 | 29 August 2023 |
| | | | | WO | 2018-155963 | A1 | 30 August 2018 |
| JP | 2022-092618 | A | 22 June 2022 | CN | 114626502 | A | 14 June 2022 |
| | | | | US | 2022-0188620 | A1 | 16 June 2022 |
| JP | 2020-512639 | A | 23 April 2020 | CN | 110268422 | A | 20 September 2019 |
| | | | | EP | 3559868 | A1 | 30 October 2019 |
| | | | | JP | 6790286 | B2 | 25 November 2020 |
| | | | | KR | 10-2019-0113928 | A | 08 October 2019 |
| | | | | KR | 10-2208989 | B1 | 28 January 2021 |
| | | | | US | 10692003 | B2 | 23 June 2020 |
| | | | | US | 2019-0303761 | A1 | 03 October 2019 |
| | | | | US | 2020-0279163 | A1 | 03 September 2020 |
| | | | | WO | 2018-175972 | A1 | 27 September 2018 |
| KR | 10-2021-0127538 | A | 22 October 2021 | KR | 10-2490411 | B1 | 20 January 2023 |
| | | | | US | 2023-0031226 | A1 | 02 February 2023 |
| | | | | WO | 2021-210706 | A1 | 21 October 2021 |

Form PCT/ISA/210 (patent family annex) (July 2022)